# FASCICULE DE BREVET EUROPEEN

(11) **EP 1 056 604 B1**
(45) Date de publication et mention de la délivrance du brevet: **28.04.2004**
(21) Numéro de dépôt: 99963585.7
(22) Date de dépôt: 20.12.1999
(51) Int. Cl.: B60C 7/16, B60C 3/02, B60C 9/04, B60C 15/02

(54) **BANDAGE FLEXIBLE UTILISABLE DE FACON NON PNEUMATIQUE**
FLEXIBLER REIFEN ZUR DRUCKLOSEN VERWENDUNG
FLEXIBLE TYRE CAPABLE OF BEING USED AS NON-PNEUMATIC TYRE

(30) Priorité: 18.12.1998 FR 9816175
(43) Date de publication de la demande: 06.12.2000
(73) Titulaire: Conception et Développement Michelin S.A., 1762 Givisiez (CH)
(72) Inventeur: LAURENT, Daniel, CH-1723 Marly (CH); DELFINO, Antonio, CH-1772 Grolley (CH); HINC, Henri, CH-1756 Onnens (CH)
(74) Mandataire: Bauvir, Jacques
(86) Numéro de dépôt international: PCT/EP1999/010130
(87) Numéro de publication internationale: WO 2000/037269

(56) Documents cités:
- EP-A- 0 452 628
- FR-A- 374 345
- FR-A- 392 603
- FR-A- 495 100
- GB-A- 279 839
- US-A- 1 687 206
- US-A- 4 265 293
- US-A- 5 535 800
- PATENT ABSTRACTS OF JAPAN vol. 013, no. 014 (M-784), 13 janvier 1989 (1989-01-13) & JP 63 225738 A (MAZDA MOTOR CORP), 20 septembre 1988 (1988-09-20)
- PATENT ABSTRACTS OF JAPAN vol. 007, no. 269 (M-259), 30 novembre 1983 (1983-11-30) & JP 58 146738 A (ISUZU JIDOSHA KK), 1 septembre 1983 (1983-09-01)

## Description

La présente invention concerne les roues de véhicules de n'importe quel type, et plus particulièrement les bandages conçus pour être capables de porter une charge sans pression de gonflage, appelés bandages non pneumatiques.

On sait que le pneu en caoutchouc renforcé et gonflé à une pression de service est devenu d'usage courant, tant ses qualités de confort et de robustesse sont grandes. Il a été adapté avec succès à des applications aussi différentes que les véhicules de tourisme, les engins de génie civil, les avions, les motos, les engins agricoles, les véhicules poids lourds de transports, etc. La pression de gonflage permet de porter une charge et de la répartir au sol.

Bien que la fiabilité d'un pneu soit devenue remarquable, on sait que le risque d'une crevaison n'est pas totalement éliminé. Le problème est que, en cas de perte de pression de gonflage, ou même plus insidieusement en cas de diminution substantielle de la pression de gonflage, le pneu n'est plus en état de rendre dans de bonnes conditions le service pour lequel il est conçu. D'où une multitude de propositions de bandage non pneumatique (voir par exemple le brevet US 5,050,656), dont le but est de supprimer la principale cause de défaillance des pneus (crevaison), mais qui ne s'imposent pas faute de pouvoir offrir un niveau suffisant de confort et/ou d'endurance et/ou d'aptitude à porter de lourdes charges. D'où également de nombreuses propositions visant à procurer aux pneus une plus grande aptitude à rouler provisoirement sans pression de gonflage, comme par exemple celle du brevet US 5,535,800. On peut aussi citer le brevet FR 374 345 correspondant au préambule de la revendication 1.

La proposition citée ci-dessus a cependant l'inconvénient qu'il est compliqué, voire impossible, de dimensionner un pneu dont les flancs restent flexibles et puissent supporter sans dommage de monter un peu brutalement sur un trottoir. En effet, les éléments de renforcement incorporés dans les flancs risquent, en cas de très forte sollicitation, d'être cintrés au point que leur extrémité radialement extérieure rejoint leur base radialement intérieure. Dans ce cas, si ces éléments sont localement suffisamment pincés de sorte qu'on atteint des rayons de courbure très petits, on dépassera leur limite de rupture ou leur limite élastique, selon les matériaux utilisés. L'objet proposé ne présente donc pas une sécurité suffisante puisqu'est grande la probabilité qu'il soit détruit (ou pire encore, localement dégradé de façon dangereuse mais non immédiatement apparente) par des sollicitations certes extrêmes mais non anormales (un choc sur le bord d'un trottoir). Un pneu usuel, même très dégonflé, supporte d'ailleurs bien mieux ces sollicitations grâce à ses flancs très souples, incapables de porter la charge par eux-mêmes.

L'état de la technique montre, par les hésitations entre les solutions radicales (bandage non pneumatique) et les solutions procurant aux pneus une aptitude limitée à rouler sans pression, que le problème de la possible défaillance des pneus est extrêmement difficile à résoudre.

En outre, même sans aborder le problème de la défaillance, un pneu tel qu'il est conçu actuellement présente d'autres inconvénients auxquels on s'est habitué depuis bien longtemps. On peut rappeler qu'un bourrelet est conçu pour que l'on puisse monter et démonter le pneu de la jante, tout en pouvant transmettre les efforts de service entre le pneu et la jante par un serrage suffisant du pneu sur la jante. Cela demande une mise au point assez délicate. Cela conduit à la construction assez massive et rigidifiée que l'on connaît. Mais si l'on raisonne en service rendu à l'utilisateur, il y a là un certain gaspillage de matière car l'utilisation d'une partie de celle-ci ne s'explique que pour assurer la montabilité et la démontabilité du pneu.

On sait aussi que le compromis entre confort (d'autant plus grand que les flancs sont très souples) et le comportement (guidage précis, ce qui conduit à rigidifier les flancs et/ou à développer des tailles de plus en plus basses pour les pneus de véhicules de tourisme), est bien difficile à régler. On sait aussi qu'est grande la propension dès pneus d'un véhicule de tourisme à se coucher sous la roue avant à l'extérieur du virage en cas d'accélération transversale importante. Dans ce cas, le pneu travaille assez mal, laissant partir trop à l'intérieur la bande de roulement et s'appuyant sur la route par l'épaule du pneu.

L'objectif de la présente invention est de proposer un bandage que l'on puisse véritablement utiliser sans pression de gonflage, qui soit capable à l'image du pneu de porter une charge importante tout en procurant un bon confort. Il s'agit de proposer une solution alternative au pneu. Il ne s'agit pas de simplement conférer à un pneumatique des aptitudes temporaires à rouler à plat.

L'invention propose un bandage flexible ayant un axe de rotation et comportant essentiellement une bande de roulement portée par une structure portante flexible située radialement à l'intérieur de ladite bande de roulement et délimitant au moins partiellement une cavité interne de révolution, ladite structure portante comprenant :
→ une zone de fixation radialement du côté de l'axe de rotation, pour l'immobilisation de ladite structure portante sur des moyens de liaison à un moyeu, ladite zone de fixation étant disposée axialement entre les limites latérales de ladite structure portante, ladite zone de fixation étant destinée à entrer en contact avec des moyens de liaison à un moyeu, lesdits moyens de liaison à un moyeu formant un ensemble rigide,
→ une pluralité d'éléments de support, s'étendant essentiellement transversalement, disposés entre la zone de fixation et la bande de roulement, lesdits éléments de support étant juxtaposés circonférentiellement et répartis tout autour de la circonférence, les éléments de support étant encastrés dans ladite zone de fixation, chaque élément de support comportant un faisceau de pièces de base flexibles superposées, séparées par une couche d'élastomère adhérant sur chacune des pièces de base de façon à former une poutre apte à être sollicitée en flexion,
→ une structure d'interconnexion entre les éléments de support, arrangée de façon à ce qu'une partie d'une sollicitation radiale d'un élément de support se reporte sur les éléments de support adjacents circonférentiellement, tout en autorisant des différences de déplacement entre éléments de support adjacents.

L'aptitude à porter une charge, dans le bandage proposé, provient essentiellement des éléments de support. Répartis circonférentiellement, les éléments de support interviennent successivement pour contribuer à la reprise de la charge lorsque le bandage roule. De préférence, ils interviennent plusieurs à la fois dans l'aire de contact. Les éléments de support sont orientés transversalement, et sollicités essentiellement en flexion pour apporter leur contribution individuelle à la reprise de la charge (c'est à dire les efforts dits en " Z "). On introduit ici la sollicitation en flexion mais le lecteur comprendra dans la suite que cette sollicitation n'est pas exclusive d'autre sollicitations.

Quant à la constitution de chaque élément de support, on verra dans la suite qu'ils comportent un faisceau de pièces de base flexibles ayant l'allure d'un ruban, superposées radialement, et séparées par une couche d'élastomère adhérant sur chacune des pièces de base. La poutre qu'ils forment ainsi est apte à être sollicitée en flexion dans un plan radial. Cet aspect de la constitution des éléments de support n'est cependant pas limitatif, notamment si l'on note que ces éléments de support doivent également s'accommoder d'autres déformations dans la mesure où ils ne se déforment pas tous de façon identique simultanément, comme cela apparaîtra mieux dans la suite de la description. En indiquant que les moyens de liaison à un moyeu doivent former un ensemble rigide, on entend indiquer que la totalité de la déflexion entre le sol et l'axe de rotation provient de la déformation du bandage flexible de l'invention, et non pas de la jante ou la roue ou du dispositif quelconque qui tiendra lieu de moyen de liaison à un moyeu, à l'instar des pneumatiques courants à l'heure actuelle par rapport à leurs roues.

L'invention est expliquée plus en détail par la description de trois exemples de réalisation, non limitatifs, illustrés aux figures jointes, dans lesquels :
la figure 1 montre une section radiale d'un premier mode de réalisation d'un bandage selon l'invention, ayant une bande de roulement d'allure bombée, ressemblant aux pneus conçus pour fonctionner en acceptant des angles de carrossage importants,
la figure 2 est un agrandissement de la partie entourée par le cercle A à la figure 1,
la figure 3 montre le même bandage déformé à un niveau de flèche intermédiaire,
la figure 4 est une section selon IV-IV à la figure 1,
la figure 5 est une section selon V-V à la figure 1,
la figure 6 montre une section radiale d'un deuxième mode de réalisation d'un bandage selon l'invention, ayant une bande de roulement d'allure assez plate, courante pour les pneus conçus pour fonctionner à des angles de carrossage nuls ou très faibles,
la figure 7 montre le bandage de la figure 6, déformé à un niveau de flèche intermédiaire,
la figure 8 montre une section radiale d'un troisième mode de réalisation d'un bandage selon l'invention, ayant aussi une bande de roulement d'allure assez plate, courante pour les pneus conçus pour fonctionner à des angles de carrossage nuls ou très faibles,
la figure 9 montre le bandage de la figure 8, monté sur une jante différente,
la figure 10 est une perspective écorchée partielle et schématique, montrant essentiellement la structure du bandage selon le deuxième ou le troisième mode de réalisation de l'invention, sans charge et à l'état libre de toute contrainte,
la figure 11 est une perspective écorchée partielle et schématique, montrant essentiellement la déformation sous charge de la structure du bandage selon le deuxième ou le troisième mode de réalisation de l'invention.

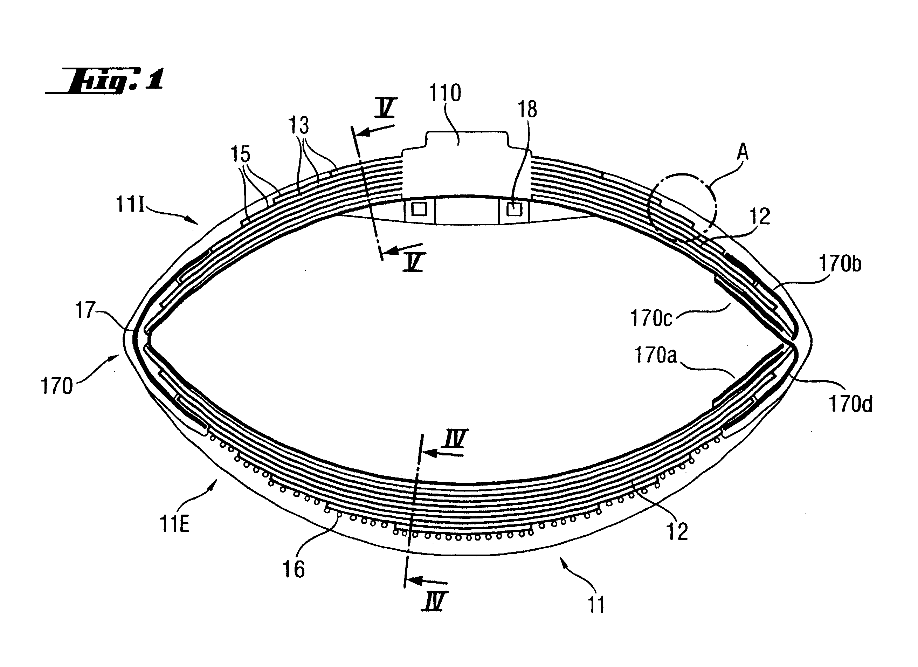

A la figure 1, on voit un bandage comportant une bande de roulement 11 dont le profil a une allure générale courbe. La paroi du bandage comporte essentiellement deux parties appelées " première et deuxième parties de structure 11I et 11E". Ces première et deuxième parties sont superposées radialement et forment deux ressorts agissant en série et sont disposées respectivement radialement à l'intérieur et radialement à l'extérieur. Une caractéristique de ce premier mode de réalisation est la pseudo-charnière séparant les première 11I et deuxième 11E parties de structure, qui constitue une zone de moindre résistance à la flexion. Cette zone du bandage, de par sa constitution, ne s'oppose pas ou s'oppose assez peu à la pliure, c'est à dire à la rotation relative des parties d'extrémités de la première partie de structure radialement intérieure et de la deuxième partie de structure radialement extérieure. Les extrémités de chacune des première et deuxième parties de structure portante sont situées sensiblement aux extrémités latérales de la structure portante. Les éléments de support sont constitués par des éléments lamifiés 12. Chaque élément de support de la première partie de structure portante va d'une extrémité latérale à l'autre extrémité latérale. Le profil de la surface radialement extérieure rappelle celui des pneumatiques de motos.

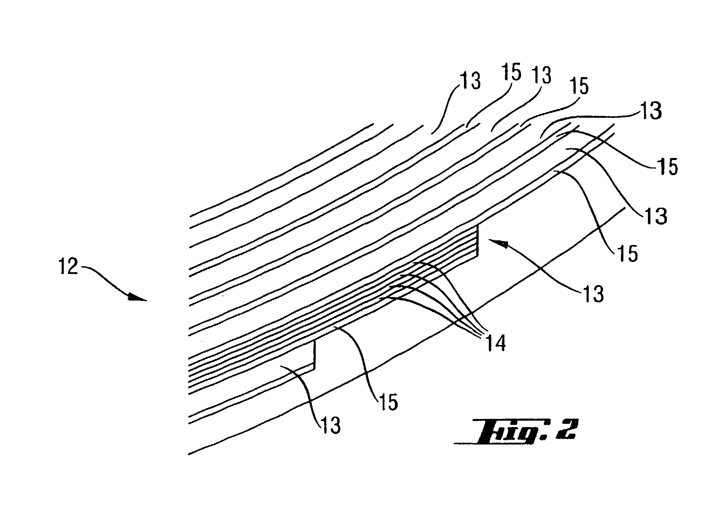

Les éléments lamifiés 12 sont capables de supporter des moments de flexion, dans une bien plus grande mesure que les câbles -même métalliques- habituellement employés pour renforcer les pneumatiques. Les éléments lamifiés 12 comportent un empilage de lames 13 flexibles superposées et séparées par une couche de caoutchouc 15 (voir figure 2). On propose d'utiliser du caoutchouc comme élastomère dans tous les exemples mais cela n'est bien entendu pas limitatif. La reprise d'une charge fait travailler chacune des lames 13 en flexion, et le caoutchouc de chaque couche 15 en cisaillement. L'épaisseur de chaque couche 15 (qui peut en outre varier), l'épaisseur de chaque lame 13 (qui peut aussi varier), le nombre des lames, le module d'élasticité du matériau employé pour les lames, le module d'élasticité de l'élastomère employé, la disposition des lames, sont autant de paramètres permettant d'ajuster les propriétés du bandage (ce qui revient à ajuster la courbe donnant force responsable de l'aptitude du bandage à porter une charge en fonction de l'écrasement du bandage, désignée couramment par l'expression "courbe charge-flèche ").

Les lames sont par exemple constituées essentiellement d'une matrice en résine thermodurcissable ou thermoplastique, renforcée par des fibres disposées majoritairement longitudinalement dans chaque lame, c'est à dire parallèlement à un plan méridien (c'est à dire un plan contenant l'axe du bandage) dans le bandage. Des fibres de verre donnent de bons résultats, mais on pourrait utiliser des fibres d'une autre nature selon l'avantage apporté par leurs caractéristiques. On peut imaginer de nombreuses variantes de réalisation des lames. Par exemple, comme on le voit à la figure 2, chaque lame est constituée de la superposition de rubans 14 collés les uns aux autres.

Les rubans peuvent être par exemple collés in situ, c'est à dire dans le bandage en cours de fabrication. C'est une solution parmi d'autres pour réaliser des lames sans précharge ou du moins avec une précharge négligeable lorsqu'elles sont implantées dans le bandage avec la courbure voulue, telle que dessinée à la figure 1. L'avantage qu'il y a à partir de minces rubans est que l'on peut, à partir d'une forme de fabrication quelconque pour lesdits rubans, leur faire épouser facilement une forme finale quelconque, la forme finale étant celle visée pour une lame. On peut coller les rubans entre eux par exemple au moyen d'une fine couche d'élastomère, ou au moyen d'une résine, rendant dans ce dernier cas les lames plus monolithiques.

L'invention s'étend ainsi à un procédé de fabrication d'un bandage flexible ayant un axe de rotation et comportant une structure portante ayant un plan médian perpendiculaire à l'axe de rotation et délimitant une cavité interne de révolution, la structure portante comportant une pluralité d'éléments de support répartis tout autour de la circonférence, chaque élément de support étant disposé sensiblement transversalement, chaque élément de support étant un élément lamifié comportant un empilage de lames flexibles superposées radialement, procédé dans lequel on dépose sur un support destructible les constituants requis pour obtenir le bandage, ledit procédé comprenant notamment les étapes suivantes :
→ amener sur le support un tronçon de ruban,
→ courber le tronçon pour lui faire épouser la forme du support,
→ immobiliser les extrémités du tronçon,
→ répéter les étapes précédentes jusqu'à obtenir l'empilage souhaité.

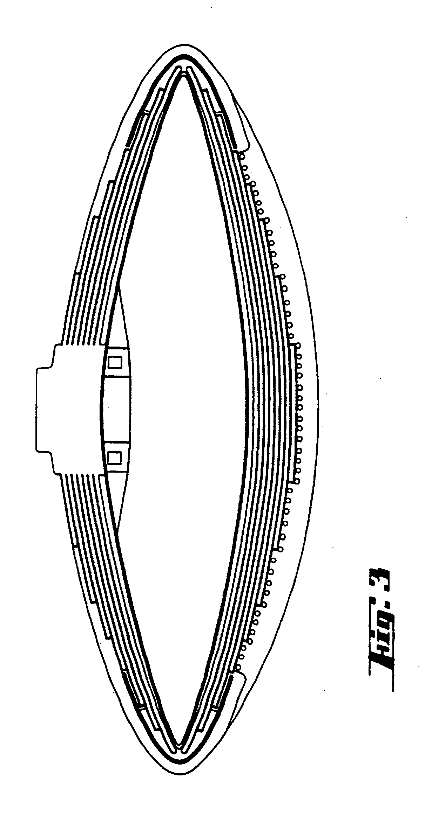

Dans ce premier mode de réalisation, dans un élément lamifié 12, en considérant la longueur des lames en abscisse curviligne en se déplaçant le long d'une lame selon une orientation allant d'une extrémité latérale vers l'autre extrémité latérale, ladite longueur de chacune des lames 13 décroît en se déplaçant dans l'épaisseur de l'élément lamifié depuis la cavité vers l'extérieur. C'est ce qui apparaît aux figures 1 et 3. En exploitant cette disposition, on peut ajuster les caractéristiques de flexibilité du bandage en adaptant l'empilage au moment de flexion qu'il faut supporter localement et en adaptant l'empilage aux flèches que l'on souhaite obtenir.

De préférence, chaque élément lamifié, au moins dans la partie de structure portante radialement extérieure, est symétrique et centré axialement. Enfin, signalons que de préférence, la zone de fixation 110 est monobloc, comme cela est visible aux figures 1 et 3. On entend par là que cette partie, destinée à être fixée à une jante (ou au moyen de liaison à un moyeu qui en tient lieu), ne présente pas de structure lamifiée. Par exemple, elle ne comporte qu'une matrice de résine et des fibres de renforcement, bien entendu de préférence des mêmes matières constitutives que les lames, et elle ne comporte pas de caoutchouc. Cette zone de fixation assure un encastrement des éléments de support.

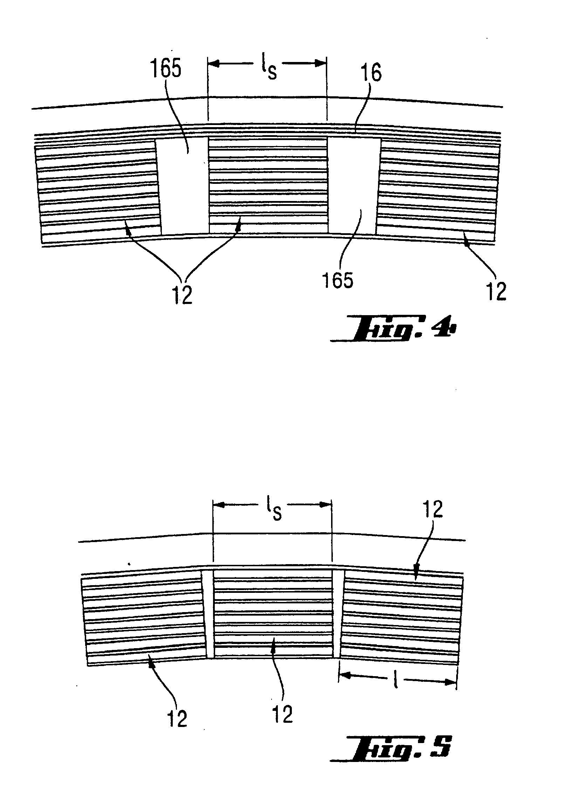

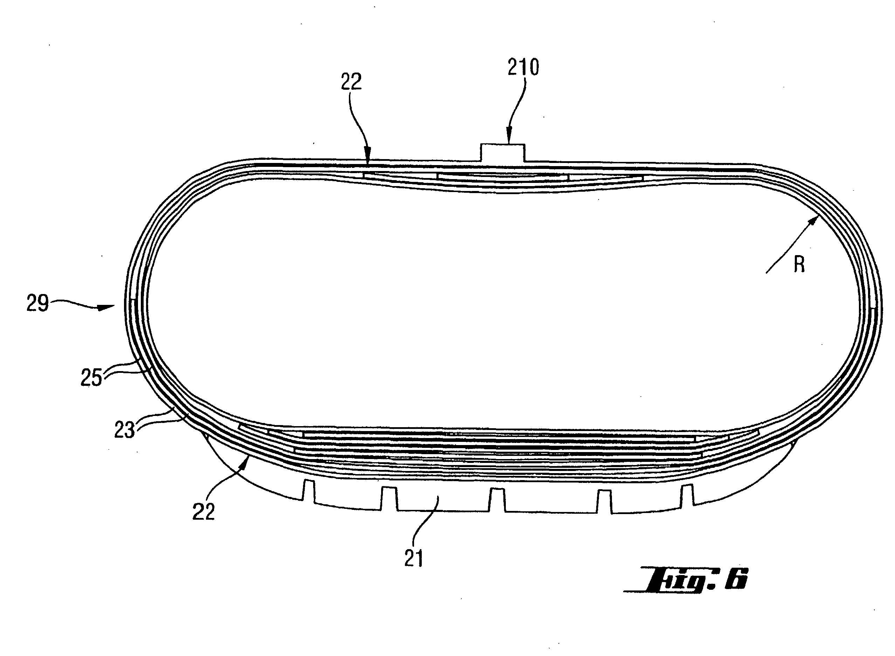

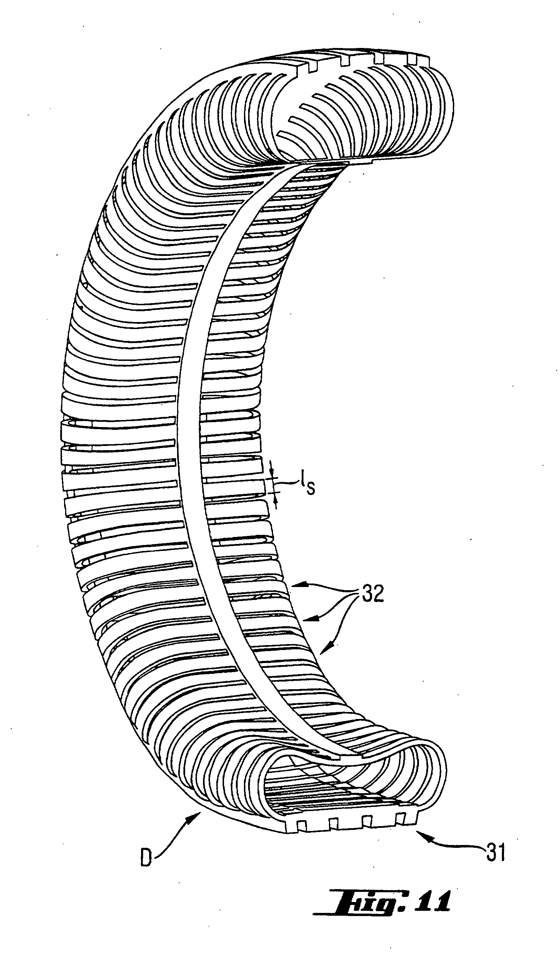

Après avoir décrit les aspects principaux de l'architecture du bandage vu en section méridienne, examinons quelle en est l'architecture vue en coupe circonférentielle. Le lecteur est renvoyé pour cela aux figures 4 et 5. De préférence également, dans un élément lamifié, en considérant que la largeur "1" est la dimension des lames en se déplaçant le long d'une lame selon une orientation circonférentielle, la largeur 1 des lames est constante (voir figure 4 et 5, ainsi que les figures 10 et 11 car le lecteur aura compris que cet aspect, comme beaucoup d'autres décrits, est également vrai pour les autres modes de réalisation). Il peut en effet être plus simple de ne fabriquer que des lames de même largeur. Bien entendu, comme on le voit en comparant les figures 4 et 5, puisque la largeur l des lames 13 est constante, l'espace entre éléments lamifiés 12 est moindre dans la partie de structure portante radialement intérieure 11I que dans la partie de structure portante radialement extérieure 11E.

Par ailleurs et toujours de préférence, la largeur " lₛ " des éléments de support (considérés circonférentiellement) est telle que le nombre d'éléments de support dans toute la circonférence est au moins 80. C'est sensiblement ce qui est dessiné aux figures 10 et 11. Cela rend le bandage suffisamment uniforme, bien que la structure partante ainsi réalisée ne puisse pas être considérée comme homogène circonférentiellement par exemple pour sa modélisation. Une telle structure portante présente une symétrie cyclique, selon une terminologie classique. Pour améliorer encore l'uniformité, on peut augmenter le nombre d'éléments de support, et diminuer concomitamment leur largeur lₛ dans la circonférence. Le bandage selon l'invention est alors avantageusement tel que, en considérant que la largeur " lₛ " est la dimension des éléments de support en se déplaçant circonférentiellement, la largeur lₛ est telle que le nombre d'élément de support dans toute la circonférence est au moins de l'ordre de 200.

Dans la partie de structure portante radialement extérieure, la structure d'interconnexion proposée comporte des renforts circonférentiels au moins sous la bande de roulement. Ce sont par exemple des fils circonférentiels 16, que l'on aperçoit notamment aux figures 1 et 4. Ces fils assurent la stabilité des dimensions du bandage en centrifugation. En outre, ces fils circonférentiels 16 aident à répartir la charge d'un élément de support (élément lamifié 12) sur le ou les éléments de support adjacents. Si l'on imagine notamment ce qui se passe si un élément de support monte sur un obstacle ponctuel, celui-ci va avoir tendance à s'esquiver car la charge tend à s'appliquer seulement sur cet élément lamifié au lieu d'être répartie sur plusieurs éléments lamifiés. Dès que l'élément lamifié surchargé fléchit plus que ses voisins, les fils circonférentiels 16 tirent sur les éléments de support voisins, reportant ainsi une partie de la charge. Ceci s'accompagne d'un certain gauchissement des éléments de support. La construction des éléments de support est telle qu'elle leur permet un certain degré de gauchissement. La réalisation proposée, en éléments lamifiés 12 comportant des pièces de pièces de base (ici des lames 13) superposées radialement et séparées par une couche de caoutchouc 15, est compatible avec le degré de gauchissement souhaitable. Mais bien entendu d'autres réalisations sont envisageables. Le bandage est ainsi capable "d'avaler" un obstacle ponctuel comme un caillou sur la chaussée. En outre, les fils circonférentiels 16 aident au passage du couple en répartissant la sollicitation sur l'ensemble des éléments lamifiés 12 de toute la circonférence du bandage.

En outre, la structure d'interconnexion proposée comporte aussi une matrice en caoutchouc 165 séparant les lames circonférentiellement (voir figure 4). Au passage, signalons que ladite structure d'interconnexion pourrait ne comporter que du caoutchouc assurant une liaison entre éléments de support, par exemple pour des applications de l'invention à des bandages modérément sollicités. Dans l'exemple décrit, le caoutchouc comble complètement l'espace entre deux éléments lamifiés adjacents. Par ailleurs, une couche de caoutchouc recouvre complètement les renforts structurels du bandage, créant ainsi une peau extérieure continue à l'image des pneus usuels. Bien entendu, on peut développer d'autres variantes, par exemple dépourvues de caoutchouc ou avec beaucoup moins de caoutchouc radialement à l'intérieur des fils circonférentiels 16. Cela peut s'avérer avantageux pour atteindre un plus faible niveau de résistance à l'avancement.

Dans la présente demande, on utilise le terme " fil " dans un sens assez générique, étant entendu que ledit fil est supposé présenter des caractéristiques suffisantes pour reporter une partie de la sollicitation radiale sur les éléments de support adjacents et pour transmettre la charge au delà de l'aire de contact. On peut utiliser des monofilaments, des multifilaments, ou des assemblages comme des câbles ou bien encore n'importe quelle structure équivalente, et ceci, quels que soient la ou les matières de ces fils, leurs modules, et quel que soit le traitement de ces fils, par exemple traitement de surface ou enrobage ou préencollage pour favoriser l'adhésion sur le caoutchouc. On entend par " circonférentiel " une orientation à un angle de zéro degré mesuré par rapport à un plan perpendiculaire à l'axe de rotation du support, reprenant ainsi les conventions usuelles pour les pneumatiques. En pratique, le renforcement peut être réalisé par bobinage d'un fil, avec un certain pas de pose, d'où il résulte que l'angle ne vaut pas zéro degré stricto sensu, mais est en pratique au moins localement légèrement supérieur à zéro degré, pour pouvoir balayer toute la largeur voulue.

Les dispositions décrites dans les trois paragraphes précédents n'ont cependant rien d'impératif. Les éléments lamifiés peuvent être interconnectés par des lames de nature semblable aux lames 13 de chaque empilage. Bien d'autres formes d'interconnexion peuvent être réalisées. En résumé, et pour dire l'essentiel, les éléments lamifiés portent la charge, ils ne travaillent pas de façon complètement isolée les uns des autres, mais ils sont reliés entre eux de façon à assurer un bon fonctionnement d'ensemble, en évitant des cisaillements trop intenses entre deux éléments lamifiés adjacents, et de façon à offrir une bonne uniformité, c'est à dire une relative constance des propriétés quelle que soit la position circonférentielle du bandage par rapport au sol.

Revenons à la liaison entre la partie de structure portante radialement extérieure 11E et la partie de structure portante radialement intérieure 11I, dont on a dit qu'elle forme une sorte de charnière 17. Des fils radiaux sensiblement inextensibles 170, noyés dans une matrice en caoutchouc, recouvrent la jonction du côté extérieur de celle-ci, pour solidariser correctement la partie de structure portante radialement intérieure et la partie de structure portante radialement extérieure (voir partie de gauche de la figure 1). Ces fils radiaux 170 sont disposés dans les zones de moindre résistance à la flexion et sont noyés dans une matrice en caoutchouc. En variante (voir partie de droite de la figure 1), chaque fil radial est disposé par rapport aux éléments de support du côté cavité interne sur l'une des parties de structure portante (voir fils 170a et 170c) et du côté extérieur sur l'autre des parties de structure portante (voir fils 170b et 170d), les fils successifs sur ladite première partie de structure portante radialement intérieure étant disposés les uns à l'extérieur et les autres à l'intérieur de la cavité interne, et de préférence en alternance.

Dans ce premier mode de réalisation, les éléments lamifiés 12 ont l'allure de ressorts à lames, sauf qu'ici les lames sont collées l'une à l'autre par une couche de caoutchouc. Les parties de structure portantes radialement intérieure 11I et extérieure 11E présentent, dans tout plan méridien, une quasi-symétrie de part et d'autre d'un cylindre virtuel passant par les charnières 17. Les parties de structure portantes radialement extérieure 11E et radialement intérieure 11I sont construites de façon à ce que chacune prenne environ la moitié de la flèche résultant d'une mise en charge, ce qui est favorable à l'endurance de la zone formant charnière car la déflexion est possible sans mouvement relatif des extrémités axiales des parties de structure portantes. La figure 3 montre l'allure du bandage en charge.

On comprend que, en cas de surcharge très importante, comme par exemple due à un choc contre une bordure de trottoir, la partie de structure portante radialement extérieure vient naturellement en butée contre la partie de structure portante radialement intérieure. Ceci survient bien avant que les éléments lamifiés aient pu être fléchis au point d'atteindre la rupture. C'est pourquoi le bandage proposé par l'invention apporte une solution très robuste, offrant une bonne endurance sous l'effet des sollicitations les plus sévères que l'on peut rencontrer en service normal sur véhicule.

Le bandage illustrant le premier mode de réalisation décrit plus haut comporte des éléments lamifiés disposés sensiblement radialement. A l'image de ce que l'on sait du fonctionnement d'un pneu radial usuel, notons que les éléments lamifiés se " déradialisent " quelque peu lors du passage dans l'aire de contact ce qui, outre la flexion, les sollicitent aussi en torsion. On appelle " déradialisation " le fait que des renforts qui sont normalement orientés radialement dans les flancs (fils de carcasse pour un pneu radial usuel, éléments de support pour les modes de réalisation du bandage décrits ici) s'écartent quelque peu de cette orientation radiale, le maximum de cet écart étant observé pour les renforts en regard de l'entrée et de la sortie de l'aire de contact avec le sol. Notons que cette déradialisation est possible par l'aptitude qu'ont les éléments de support à s'accommoder d'autres déformations qu'une simple flexion dans un plan radial.

Quant à la fixation sur des moyens de liaison à un moyeu, le bandage peut se fixer à un disque de roue ou à tout autre organe assurant la liaison fonctionnelle rigide avec un moyeu. L'ensemble bandage et roue présente, à l'image de ce que l'on connaît pour les pneus, une rigidité transversale suffisante pour pouvoir guider un véhicule, notamment en virages. En ce qui concerne le bandage, un ou plusieurs renforcements circonférentiellement inextensibles, par exemple des cerceaux rigides 18 pour le premier mode de réalisation, sont disposés dans la zone de fixation, et contribuent à la bonne immobilisation du bandage sur sa jante en cas d'efforts transversaux.

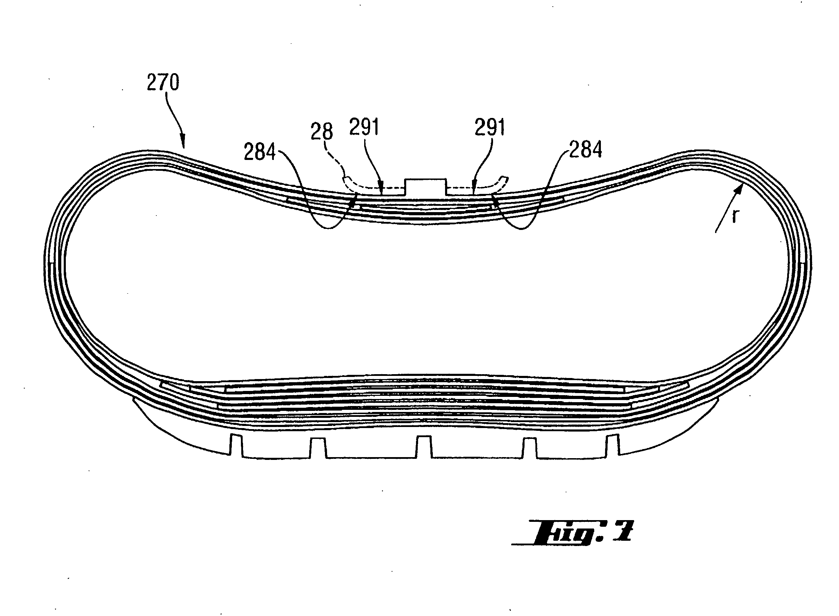

La figure 6 illustre un deuxième mode de réalisation dans lequel le profil du bandage, vu en section méridienne, rappelle le profil d'un pneu conçu pour fonctionner à angle de carrossage nul ou de valeur très faible (par exemple les pneus pour véhicules de tourisme). Les flancs 29 sont arrondis et occupent la majeure partie de la hauteur radiale du bandage. La structure portante comporte essentiellement des éléments lamifiés 22 comportent un empilage de lames 23 flexibles, superposées et séparées par des couches de caoutchouc 25, et constituant les éléments de support. La zone de fixation 210 est disposée sensiblement au centre de la paroi radialement intérieure du bandage. Les éléments de support, qui franchissent cette zone de fixation 210 et forment de part et d'autre un porte-à-faux, sont tout comme dans le premier mode de réalisation encastrés dans ladite zone de fixation.

Les paramètres de dimensionnement, de réglage des propriétés du bandage selon ce deuxième mode de réalisation sont notamment ceux évoqués précédemment, à savoir l'épaisseur de chaque couche 25, de chaque lame 23, le nombre des lames, le module d'élasticité du matériau employé pour les lames, le module d'élasticité de l'élastomère employé, la disposition des lames. De même, pour la constitution des lames 23, le lecteur est renvoyé aux explications fournies pour les lames 13. Le bandage comporte aussi des renforts orientés circonférentiellement (non représentés) sous la bande de roulement.

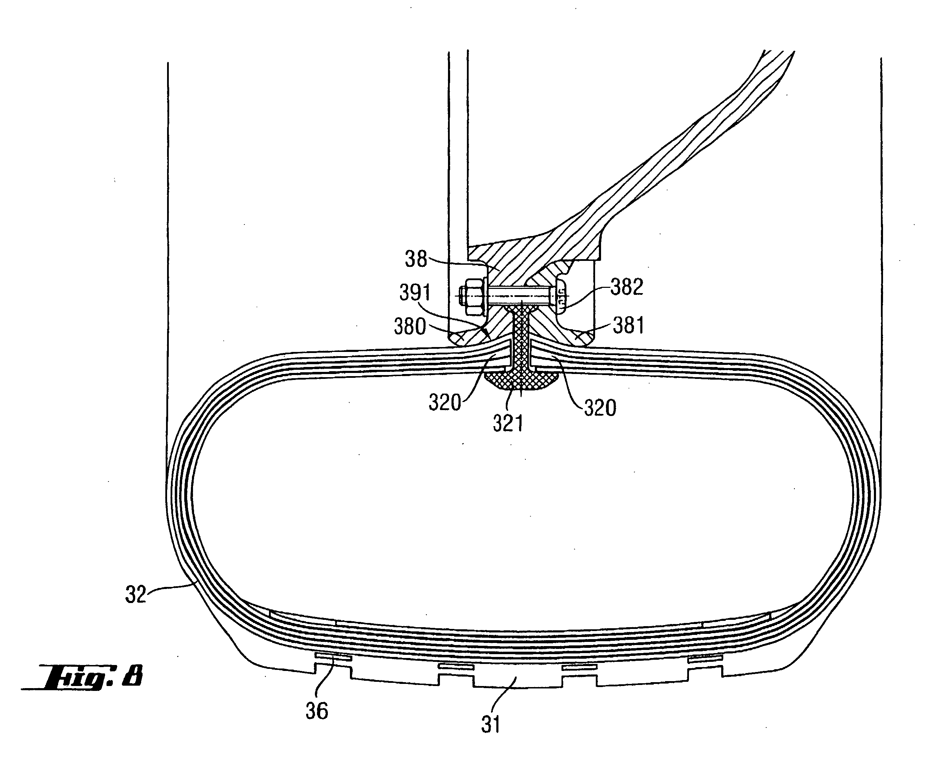

Le bandage comporte une bande de roulement 21, qui peut être très légèrement arquée lorsqu'il ne supporte pas de charge. La partie radialement extérieure de la structure portante, c'est à dire la zone comportant la bande de roulement 21 et la partie des flancs 29 proche de la bande de roulement 21, ne contribuent que très peu à la prise de flèche (dans le sens radial) sous l'effet de la charge. Les flancs 29, et plus particulièrement la partie radialement intérieure de ceux-ci, ainsi que la paroi radialement intérieure de la structure portante, sont le siège de déformations responsables de la majeure partie de la flèche sous charge. La partie de la structure portante radialement intérieure, qui à charge nulle est sensiblement rectiligne (voir figure 6), parallèle à l'axe de rotation, prend une allure déformée en arc dont la concavité est dirigée vers l'intérieur (voir figure 7), ce qui s'accompagne d'un léger rapprochement relatif de ses limites latérales. Ce mode de déformation applique à chacune des zones latérales de la structure portante sous la bande de roulement un moment tendant à reporter de la charge dans la zone centrale de la bande de roulement, et concomitamment à soulager les épaules du bandage, ce qui globalement permet d'assurer une relative constance des pressions au sol dans l'aire de contact.

Tout comme pour le premier mode de réalisation, le bandage se fixe à un disque de roue ou à tout autre organe assurant la liaison fonctionnelle rigide avec un moyeu. L'ensemble présente, dans la zone médiane de la paroi radialement intérieure de la structure portante, une rigidité transversale suffisante pour pouvoir guider un véhicule, notamment en virages.

Notons encore que l'on peut ajuster les propriétés du bandage en agissant sur la conception des moyens de liaison au moyeu du bandage, que l'on appelle " jante " par commodité de langage. En élargissant plus ou moins, de préférence de façon symétrique, la surface d'appui 291 du bandage sur la jante, on peut ajuster la flexibilité radiale du bandage, un peu à l'instar de la pression de gonflage d'un pneu, que l'on ajuste pour un pneu d'un même modèle selon le véhicule équipé, selon l'essieu dans le véhicule, et selon que le véhicule est utilisé en charge ou à vide. Donc selon la jante utilisée, la flexibilité radiale du bandage monté sur sa jante varie.

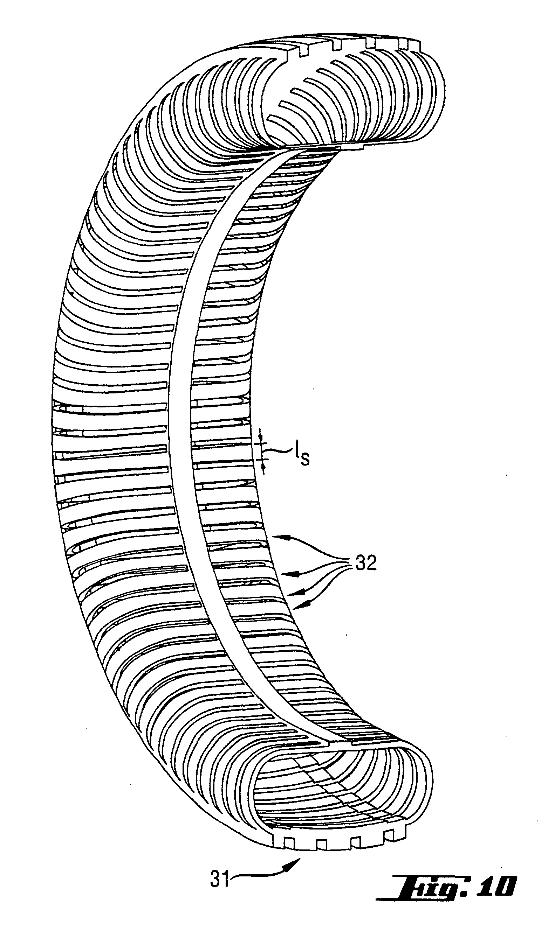

L'invention s'étend à une jante destinée à être utilisée avec un bandage déformable conçu selon ce qui a été expliqué ci-dessus, ladite jante comportant des moyens de montage pour recevoir et immobiliser ladite zone de fixation du bandage, et comportant, d'un côté au moins axialement (et de préférence des deux), un siège s'étendant sensiblement parallèlement à ladite zone de fixation du bandage, dans laquelle la position axiale du point axialement le plus à l'extérieur 284 encore en contact avec le bandage est réglable (voir figure 7, en notant que ladite surface d'appui est comprise axialement entre les limites fixées par les points 284, ou 384 à la figure 9). De cette façon, on peut faire varier la surface d'appui 291 du bandage sur la jante. Tout le long de l'appui, la paroi du bandage ne peut se déplacer radialement vers l'axe de rotation, ce qui modifie le fonctionnement du bandage.

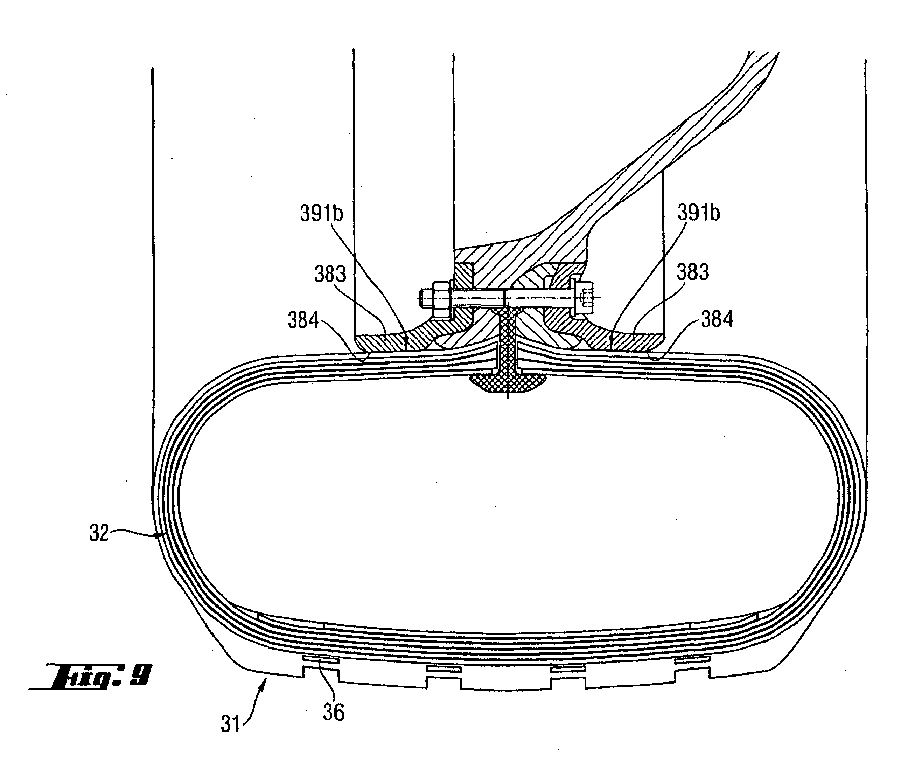

Les figures 8 et 9 illustrent un troisième mode de réalisation fort semblable au deuxième. On retrouve une bande de roulement 31 et des éléments de support 32. La structure d'interconnexion comporte des renforts circonférentiels 36 en forme de lames. La zone de fixation est fendue circonférentiellement (non représenté aux vues simplifiées des figures 10 et 11), de sorte que le bandage présente deux épaississements en coins de liaison 320, susceptibles d'être déplacés axialement relativement l'une par rapport à l'autre. Lesdits coins de liaison 320 sont destinées chacune à venir en contact avec lesdits moyens de liaison à un moyeu, notamment par une portée de contact 391 du côté radialement intérieur de chacune desdits coins de liaison 320. Lesdits coins de liaison, qui constituent la zone de fixation déjà évoquée, assurent l'encastrement des éléments de support 32.

On voit à la figure 8 que lesdits moyens de liaison ressemblent à une jante étroite conçue pour pincer lesdits coins de liaison 320 au moyen d'un profilé 321 de forme appropriée. On voit un disque de roue 38 prolongé par un premier rebord 380. Un second rebord 381 est monté sur le disque 38 au moyen de vis et écrous 382, avec insertion du profilé 321 et desdits coins de liaison 320 du bandage. Le profilé 321 est une pièce de révolution dont la section méridienne est bien visible aux figures 8 et 9, et qui peut être fendu, donc interrompu circonférentiellement, de façon à en faciliter l'insertion entre lesdits coins 320 du bandage. Ensuite, le bandage, avec le profilé inséré entre lesdits coins 320, est positionné correctement par rapport au premier rebord 380, puis le second rebord 381 est fixé sur le premier, avec interposition du profilé. Le profilé 321 permet, avec les premiers et seconds rebords 380 et 381, de pincer lesdits coins de liaison 320, de sorte que le bandage est encastré sur les moyens de liaison au moyeu, ce qui est le montage préféré du bandage.

Ainsi, l'invention s'étend aussi à une jante comportant des moyens de montage pour recevoir et immobiliser un bandage flexible ayant un axe de rotation et comportant essentiellement une bande de roulement portée par une structure portante flexible située radialement à l'intérieur de ladite bande de roulement et délimitant au moins partiellement une cavité interne de révolution, ladite structure portante comprenant une zone de fixation radialement du côté de l'axe de rotation, pour l'immobilisation de ladite structure portante sur des moyens de liaison à un moyeu, lesdits moyens de liaison à un moyeu formant un ensemble rigide, ladite zone de fixation étant disposée axialement entre les limites latérales de ladite structure portante, ladite zone de fixation étant fendue circonférentiellement, de sorte que le bandage présente deux coins de liaison 320, susceptibles d'être déplacés axialement relativement l'une par rapport à l'autre, ladite jante comportant :
- deux rebords 380, 381 servant chacune de siège pour l'une des deux coins 320,
- un profilé 321 destiné à coopérer avec lesdits rebords 380, 381 pour pincer lesdits coins 320 et les immobilser sur la jante. La forme de fabrication du bandage peut être différente de la forme d'utilisation imposée par le moyen de liaison tenant lieu de jante. Par exemple, on peut contraindre lesdits coins de liaison 320 à se rapprocher axialement lors du montage. La forme évasée desdits coins de liaison 320, formant une sorte de queue d'aronde, aide à éviter tout démontage accidentel du bandage sous l'effet de la précontrainte installée dans celui-ci. On peut ainsi ajuster la flexibilité par une précharge dans les éléments lamifiés 32 selon l'écart axial relatif entre lesdits coins de liaison 320 du bandage.

Par ailleurs, tout comme déjà expliqué ci-dessus, selon la dimension de la portée de contact 391, on peut agir sur la prise de flèche par le bandage. On peut aussi ajouter des cercles supplémentaires 383 pour élargir la surface d'appui du bandage dans le but évoqué ci-dessus (voir portée 391b à figure 9).

Enfin, les figures 10 et 11 représentent l'allure générale de la structure portante flexible. La comparaison de ces figures montre la flèche obtenue avec un bandage selon l'invention. Notons qu'une certaine déradialisation des éléments de support existe dans tous les modes de réalisation décrits. Ceci est notamment visible à la partie inférieure de la figure 11, en observant attentivement la zone fléchie D, où l'on constate que la flexion des éléments de support s'accompagne d'un basculement des éléments de support provoquant un gauchissement de leur partie juste au delà de l'encastrement, ce gauchissement et ce basculement étant d'autant plus importants que l'on s'éloigne longitudinalement du plan de coupe.

Dans les exemples illustrant le présent mémoire, les éléments de support ont la forme d'éléments lamifiés. Le faisceau de pièces de base est donc formé par un empilage de lames, avec interposition de caoutchouc, quelle que soit la forme de réalisation des lames elles-mêmes. A la lumière de la description suivante, la fonction de ces éléments de support apparaîtra plus clairement, et l'homme du métier pourra bien entendu substituer à ces éléments lamifiés d'autres formes de réalisation, c'est à dire substituer aux lames d'autres formes pour les pièces de base, pourvu que les éléments de support offrent la souplesse radiale recherchée et apportent la contribution requise à la reprise de la charge, et aussi soient aptes à offrir les caractéristiques convenables face aux sollicitations non radiales dont est le siège un tel bandage (transmission des efforts dits en " X " et en " Y ") et à travailler en harmonie avec les éléments de support adjacents. C'est à dire que la structure portante, en se déformant, permet une certaine mise à plat de la zone sous la bande de roulement concernée par le contact avec le sol, de sorte que l'empreinte au sol du bandage chargé présente une certaine taille, à l'instar du fonctionnement bien connu des pneumatiques gonflés.

Notons aussi que chaque élément de support est présent au moins dans la partie de la structure portante comprise entre les extrémités latérales de ladite structure portante et la bande de roulement, et pas nécessairement sous la bande de roulement, bien que dans les exemples décrits, lesdits éléments de support sont continus sous la bande de roulement. On pourrait cependant, en variante et au moins sous une partie importante de la bande de roulement, remplacer l'empilage de lames, c'est à dire le faisceau de pièces de base, par une virole assez rigide du genre de celle proposée comme renforcement sous la bande de roulement dans le brevet US 4,111,249. On peut également remplacer l'empilage de lames par une barrette relativement rigide ; circonférentiellement, on dispose un grand nombre de barrette, l'ensemble des barrettes étant articulées entre elles et formant ainsi une sorte de chenille circonférentielle (voir par exemple la structure de renforcement sous la bande de roulement décrite dans la demande de brevet EP 0 836 956). Plus généralement, on pourrait ainsi disposer sous la bande de roulement une structure quelconque, pourvu qu'elle soit capable de reporter un cisaillement vers les parties latérales du bandage.

Notons encore que, dans toutes les variantes proposées, la partie de la structure portante radialement intérieure, la plus proche de l'axe de rotation, a une contribution importante à la flèche sous charge, donc au confort procuré par le bandage. Dès lors, il convient que la zone de fixation soit localisée de préférence sur une fraction correspondant à au plus 50% de la distance séparant axialement les limites latérales du bandage. Ladite partie radialement intérieure de la structure portante flexible est ainsi en porte-à-faux assez prononcé au delà de la zone de fixation. Une disposition constructive favorable est que les éléments de support soient, juste au delà de la zone de fixation, orientés selon une direction sensiblement parallèle à l'axe de rotation. C'est ce qui apparaît dans les exemples décrits ci-dessous. Notons enfin que, les bandages décrits étant symétriques, la zone de fixation est sensiblement centrée entre les limites axiales dudit bandage, sans que ceci ne soit limitatif. On pourrait bien entendu adopter une architecture dissymétrique, notamment dans la localisation de la zone de fixation.

Quant au degré de contribution à la flèche sous charge de la partie de la structure portante radialement extérieure, il peut être variable selon les modes de réalisation.

Dans le premier exemple proposé, la structure portante comporte une première partie de structure portante radialement intérieure et une deuxième partie de structure portante radialement extérieure, lesdites première et deuxième parties de structure portante étant solidarisées l'une à l'autre par une zone de moindre résistance à la flexion, chacune desdites première et deuxième parties de structure portantes contenant lesdits éléments de support, chaque élément de support de la première partie de structure portante radialement intérieure allant au moins d'une extrémité latérale à ladite zone de fixation, de sorte que les zones de moindre résistance à la flexion entre les première et deuxième parties de structure portante sont, sous l'effet des sollicitations de service, mobiles radialement par rapport à la zone de fixation. De préférence, chaque élément de support de la deuxième partie de structure portante radialement extérieure va d'une extrémité latérale à l'autre extrémité latérale de ladite deuxième partie de structure portante.

La partie de la structure portante radialement intérieure forme deux zones qui sont en porte-à-faux par rapport à la liaison centrale rigide. Selon l'invention, ces deux zones participent pleinement à la souplesse du bandage. C'est ce que l'on a voulu exprimer ci-dessus en précisant que les zones de moindre résistance à la flexion sont, sous l'effet des sollicitations de service, mobiles radialement par rapport à la zone de fixation. Il en résulte une conséquence claire, d'ailleurs valable pour tous les modes de réalisation : pour permettre le bon fonctionnement du bandage selon l'invention, aucun obstacle ne doit empêcher la déformation élastique radialement vers l'intérieur de la partie de structure portante radialement intérieure, c'est à dire de la partie aboutissant à ladite liaison centrale rigide. Celle-ci, en fléchissant, se rapproche quelque peu de l'axe de rotation. La forme du bandage en flexion maximale dicte donc une enveloppe limite à l'extérieur de laquelle on ne doit trouver aucune des pièces mécaniques du véhicule : disque de roue et/ou jante, organes de freinage, organes de suspension, etc.

Dans le premier des exemples illustrés, le degré de contribution à la flèche sous charge de la partie de la structure portante radialement extérieure est sensiblement équivalent au degré de contribution à la flèche sous charge de la partie de la structure portante radialement intérieure. Bien entendu, ladite zone de moindre résistance à la flexion peut être moins localisée, et concerner une partie plus importante de la paroi de la structure portante.

Dans un deuxième mode de réalisation, les éléments de support sont continus dans le flanc du bandage. La contribution à la flèche provient majoritairement de la partie de la structure portante située radialement à l'intérieur. On voit, en consultant ensemble les figures 6 et 7, que la flexion due à une charge provoque une diminution du rayon de courbure formé par les éléments de support : R à la figure 6, représentant le bandage non chargé, est plus grand que r à la figure 7, représentant le bandage chargé.

Revenons au montage du bandage proposé par l'invention. Dans le cas d'un pneu usuel, on sait que la jante a sensiblement la largeur du pneu. Ici au contraire, le bandage déborde largement de part et d'autre de la pièce mécanique centrale tenant lieu de jante, que l'on a désignée plus généralement dans l'introduction de l'invention par l'expression plus fonctionnelle de " moyens de liaison à un moyeu ". Ces moyens peuvent prendre des formes très variées. Il peut s'agir d'un disque semblable à un disque de roue, terminé par une pièce de révolution dont le profil méridien est une gorge ouverte vers les plus grands rayons, réalisée par exemple en deux parties pour pouvoir enserrer une nervure du bandage ayant une forme complémentaire. Il peut aussi s'agir d'une roue du genre de celle décrite dans le brevet US 5,071,196, c'est à dire dépourvue de disque. En résumé, et pour dire l'essentiel, lesdits moyens de liaison à un moyeu sont rigides comme l'est la roue avec sa jante dans l'état de la technique d'usage courant.

Quant à la matière constitutive des pièces de base, c'est avantageusement une matière composite, c'est à dire une association de matériaux différents. Les éléments de support illustrés ici sont des éléments lamifiés. La géométrie des éléments de support leur permet d'offrir la flexibilité désirable sans atteindre ni la rupture ni la limite élastique aux déformations rencontrées. Chacune des lames est de très faible épaisseur. Elle peut donc se déformer en atteignant des rayons de courbure faibles.

Aucune lame n'est capable de porter seule la charge nominale recherchée. On va donc multiplier les lames ; leurs contributions respectives à la reprise de la charge vont approximativement s'additionner. Les lames sont solidarisées entre elles par du caoutchouc qui adhère auxdites lames. Ainsi, grâce à un empilage de quelques lames très minces, on obtient une portance suffisante tout en pouvant atteindre flèche importante.

L'architecture du bandage proposée permet de construire des bandages conçus pour fonctionner sans pression de gonflage (bandage non pneumatique). Notons que, et ceci est une remarque importante, rien n'empêche de mettre dans le bandage proposé une certaine pression d'air. Il suffit bien entendu de faire en sorte que le bandage soit étanche à l'air. On ajoute à la structure portante une peau adéquate, qui de toutes façons est utile pour éviter l'encrassement de la cavité interne. On peut alors ajuster les caractéristiques, notamment de flexibilité, en jouant sur une certaine mise en pression " p " de la cavité interne. En faisant une analogie avec un pneu gonflé, la mise en pression " p " évoquée ici pour le bandage selon l'invention se compare à la variation de pression Δp autour d'une pression nominale P pour laquelle ledit pneu à gonfler est conçu. Ainsi et pour fixer les idées, lorsque selon ses destinations, on utilise un pneu conventionnel à des niveaux de pressions allant de P à P+Δp, on va utiliser le bandage selon l'invention, selon ses destinations, à des " niveaux " de pression allant de 0 (c'est à dire pas de pression) à Δp.

Mais ceci n'est qu'un moyen de réglage parmi d'autres, plus structurels, qui ont été expliqués. Il n'en reste pas moins vrai que le bandage proposé est conçu pour fonctionner véritablement sans pression de gonflage, et comprend :
→ une zone de fixation radialement du côté de l'axe de rotation, pour l'immobilisation de ladite structure portante sur des moyens de liaison à un moyeu, lesdits moyens de liaison à un moyeu étant conçus pour former un ensemble rigide,
→ une pluralité d'éléments de support, s'étendant essentiellement transversalement, disposés entre la zone de fixation et la bande de roulement, lesdits éléments de support étant juxtaposés circonférentiellement et répartis tout autour de la circonférence, chaque élément de support comportant un faisceau de pièces de base flexibles 13, 23 superposées, séparées par une couche d'élastomère 15, 25 adhérant sur chacune des pièces de base de façon à former une poutre apte à être sollicitée en flexion,
→ une structure d'interconnexion entre les éléments de support, arrangée de façon à ce qu'une partie d'une sollicitation radiale d'un élément de support se reporte sur les éléments de support adjacents circonférentiellement, tout en autorisant des différences de déplacement entre éléments de support adjacents
→ les éléments de support et la structure d'interconnexion étant dimensionnés pour un fonctionnement dudit bandage sans pression de gonflage.

Un avantage de la présente invention est de proposer une architecture qui permette plus particulièrement à la fois de porter la charge voulue et d'absorber sans dommage des obstacles très ponctuels comme un caillou sur la route.

Un autre avantage de l'invention est encore d'assurer, autrement que par le serrage d'un bourrelet sur une jante, la liaison entre le bandage et la jante ou la ou les pièces tenant lieu de jante pour donner la référence qu'est l'axe de rotation. Il en résulte une économie de matière, donc un avantage de poids, de cette partie du bandage.

On a vu que le bandage flexible proposé comporte une structure portante, une bande de roulement radialement du côté extérieur de la structure portante, et des moyens de fixation à une jante rigide ou à une pièce mécanique équivalente. On a aussi vu que la structure portante comportant une pluralité d'éléments de support juxtaposés et répartis tout autour de la circonférence, chaque élément de support étant disposé selon une orientation principalement transversale, et généralement radiale, de façon à ce que chaque élément de support intervienne successivement pour reporter une fraction de la charge du bandage de la bande de roulement au moyeu lorsque le bandage roule et est chargé, le report de la charge sollicitant chaque élément de support essentiellement en flexion. Les bandages illustrant l'invention sont capables de procurer une bonne adhérence et une bonne aptitude à transmettre des poussées latérales importantes. On a constaté en outre que, pour les bandages conformes aux figures 6 à 11, une augmentation de la sollicitation transversale, survenant par exemple en virage, s'accompagne d'une légère diminution de la flèche radiale dudit bandage, procurant un effet anti-roulis.

En résumé, les éléments de support sont avantageusement constitués par des éléments lamifiés comportant un empilage de lames flexibles, les lames flexibles étant superposées radialement et séparées par une couche d'élastomère adhérant sur chacune des lames, la flexion des éléments lamifiés s'accompagnant d'un déplacement tangentiel relatif entre lames et d'une mise sous contrainte de cisaillement de l'élastomère, chaque élément lamifié étant flexible radialement sous l'effet des sollicitations de service, la flexion d'un élément lamifié reportant un moment sur lesdits moyens de fixation. En outre, on a vu que la structure portante comporte des moyens d'interconnexion entre les éléments de support (les éléments lamifiés), arrangés de façon à ce qu'une partie de la sollicitation radiale des éléments de support se trouve reportée sur les éléments lamifiés adjacents circonférentiellement, tout en autorisant les différences de déplacement entre éléments lamifiés adjacents. Ces moyens d'interconnexion peuvent intéresser les éléments de support sur toute leur longueur, ou seulement une partie de celle-ci, plus particulièrement sous la bande de roulement. La structure portante est agencée de sorte que, lorsque la flèche radiale prise par le bandage amène la partie radialement extérieure de la structure portante en butée contre la zone de fixation à la jante (immobile), les contraintes dues à la flexion dans les éléments de support qui en résultent sont inférieures à la limite de rupture (et sont inférieures à la limite élastique si un matériau ayant une limite élastique inférieure à la limite de rupture intervient dans la constitution des pièces de base).

## Revendications

1. Bandage flexible ayant un axe de rotation et comportant essentiellement une bande de roulement (11, 21) portée par une structure portante (11I, 11E) flexible située radialement à l'intérieur de ladite bande de roulement et délimitant au moins partiellement une cavité interne de révolution, ladite structure portante comprenant :
→ une zone de fixation (110, 210) radialement du côté de l'axe de rotation, pour l'immobilisation de ladite structure portante sur des moyens de liaison à un moyeu, ladite zone de fixation étant disposée axialement entre les limites latérales de ladite structure portante, ladite zone de fixation étant destinée à entrer en contact avec lesdits moyens de liaison à un moyeu, lesdits moyens de liaison à un moyeu étant conçus pour former un ensemble rigide,
→ une pluralité d'éléments de support (12, 22), s'étendant essentiellement transversalement, disposés entre la zone de fixation et la bande de roulement, lesdits éléments de support étant juxtaposés circonférentiellement et répartis tout autour de la circonférence, les éléments de support étant encastrés dans ladite zone de fixation, chaque élément de support comportant un faisceau de pièces de base flexibles (13, 23) superposées,
→ une structure d'interconnexion (165) entre les éléments de support,
**caractérisé en ce que**
les pièces de base flexibles (13, 23) superposées dans chaque faisceau sont séparées par une couche d'élastomère (15, 25) adhérant sur chacune des pièces de base de façon à former une poutre apte à être sollicitée en flexion et **en ce que** la structure d'interconnexion (165) entre les éléments de support est arrangée de façon à ce qu'une partie d'une sollicitation radiale d'un élément de support se reporte sur les éléments de support adjacents circonférentiellement, tout en autorisant des différences de déplacement entre éléments de support adjacents.

2. Bandage selon la revendication 1, dans lequel la zone de fixation (110, 210) est localisée sur une fraction correspondant à au plus 50% de la distance séparant axialement lesdites limites latérales.

3. Bandage selon la revendication 1 ou 2, dans lequel lesdits éléments de support sont continus sous la bande de roulement (11, 21).

4. Bandage selon l'une des revendications 1 à 3, dans lequel les pièces de base sont en matière composite.

5. Bandage selon l'une des revendications 1 à 4, dans lequel les éléments de support sont, juste au delà de la zone de fixation, orientés selon une direction sensiblement parallèle à l'axe de rotation.

6. Bandage selon l'une des revendications 1 à 5, dans lequel la zone de fixation (110, 210) est sensiblement centrée entre les limites axiales dudit bandage.

7. Bandage selon l'une des revendications 1 à 6, dans lequel la zone de fixation (110, 210) est monobloc.

8. Bandage selon l'une des revendications 1 à 7, dans lequel la structure portante comporte une première partie de structure portante radialement intérieure (11I) et une deuxième partie de structure portante radialement extérieure (11E), lesdites première et deuxième parties de structure portante étant solidarisées l'une à l'autre par une zone de moindre résistance à la flexion ( 17), chacune desdites première et deuxième parties de structure portante contenant lesdits éléments de support, chaque élément de support de la première partie de structure portante allant au moins d'une extrémité latérale à ladite zone de fixation, de sorte que les zones de moindre résistance à la flexion entre les première et deuxième parties de structure portante sont, sous l'effet des sollicitations de service, mobiles radialement par rapport à la zone de fixation.

9. Bandage selon la revendication 8, dans lequel chaque élément de support de la deuxième partie de structure portante radialement extérieure va d'une extrémité latérale à l'autre extrémité latérale de ladite deuxième partie de structure portante.

10. Bandage selon la revendication 8 ou 9, dans lequel chaque élément de support de la première partie de structure portante radialement intérieure va d'une extrémité latérale à l'autre extrémité latérale.

11. Bandage selon l'une des revendications 8 à 10, dans lequel la section méridienne de la première partie de structure radialement intérieure portante a une allure générale arquée dont la concavité est orientée radialement vers l'extérieur.

12. Bandage selon l'une des revendications 8 à 11, dans lequel la section méridienne de la deuxième partie de structure portante radialement extérieure a une allure générale arquée dont la concavité est orientée radialement vers l'intérieur.

13. Bandage selon l'une des revendications 8 à 12 dans lequel les extrémités de chacune des première et deuxième parties de structure portante sont situées sensiblement aux limites latérales de la structure portante.

14. Bandage selon l'une des revendications 8 à 13 dans lequel les zones de moindre résistance à la flexion comportent des fils radiaux inextensibles (170), noyés dans une matrice en élastomère.

15. Bandage selon la revendication 14 dans lequel chaque fil radial est disposé par rapport aux éléments de support du côté cavité interne sur l'une des parties de structure portante (11I) et du côté extérieur sur l'autre des parties de structure portante (11E), les fils successifs sur ladite première partie de structure portante radialement intérieure étant disposés les uns à l'extérieur (170b, 170d) et les autres à l'intérieur (170a, 170c) de la cavité interne.

16. Bandage selon l'une des revendications 8 à 15 dans lequel, dans un élément de support, en considérant la longueur des pièces de base en abscisse curviligne, la longueur de chacune des pièces de base décroît en se déplaçant dans l'épaisseur d'un élément de support depuis la cavité vers l'extérieur.

17. Bandage selon l'une des revendications 1 à 7, dans lequel la zone de fixation est fendue circonférentiellement, de sorte que le bandage présente deux coins de liaison (320), susceptibles d'être déplacés axialement relativement l'une par rapport à l'autre.

18. Bandage selon l'une des revendications 1 à 7 ou 17 dans lequel, dans la partie d'un élément de support située sous la bande de roulement, en considérant la longueur des pièces de base en abscisse curviligne, la longueur de chacune des pièces de base croît en se déplaçant dans l'épaisseur d'un élément de support depuis la cavité vers l'extérieur.

19. Bandage selon l'une des revendications 1 à 18 dans lequel chacune des pièces de base est une lame flexible, de sorte que chaque élément de support forme un élément lamifié comportant un empilage desdites lames flexibles.

20. Bandage selon la revendication 19 dans lequel, dans un élément lamifié, en considérant que la largeur " 1 " est la dimension des lames en se déplaçant le long d'une lame selon une orientation circonférentielle, la largeur des lames est constante.

21. Bandage selon la revendication 19 ou 20, dans lequel chaque lame est constituée de la superposition de rubans (14) collés les uns sur les autres.

22. Bandage selon l'une des revendications 19 à 21, dans lequel les lames sont constituées d'une matrice en résine thermodurcissable ou thermoplastique, renforcée par des fibres disposées majoritairement longitudinalement dans chaque lame.

23. Bandage selon l'une des revendications 1 à 22 dans lequel, en considérant que la largeur " lₛ " est la dimension des éléments de support en se déplaçant circonférentiellement, la largeur lₛ est telle que le nombre d'élément de support dans toute la circonférence est au moins 80.

24. Bandage selon l'une des revendications 1 à 22 dans lequel, en considérant que la largeur " lₛ " est la dimension des éléments de support en se déplaçant circonférentiellement, la largeur lₛ est telle que le nombre d'élément de support dans toute la circonférence est au moins 200.

25. Bandage selon l'une des revendications 1 à 24 dans lequel la structure d'interconnexion comporte des renforts circonférentiels (16, 36) au moins sous la bande de roulement.

26. Bandage selon l'une des revendications 1 à 25, dans lequel la structure d'interconnexion comporte une matrice en élastomère (165) séparant les éléments de support circonférentiellement.

27. Bandage selon l'une des revendications 1 à 26, dans lequel les éléments de support sont disposés sensiblement radialement.

28. Bandage selon l'une des revendications 1 à 27 dans lequel la zone de fixation (110, 210) comporte au moins un renforcement circonférentiellement inextensible (18).

29. Bandage selon l'une des revendications 1 à 28, dans lequel l'élastomère est un caoutchouc.

30. Jante destinée à être utilisée avec un bandage selon l'une des revendications 1 à 29, comportant des moyens de montage pour recevoir et immobiliser ladite zone de fixation (110, 210) du bandage, et comportant, d'un côté au moins axialement, un siège s'étendant sensiblement parallèlement à ladite zone de fixation du bandage, **caractérisée en ce que** la position axiale du point axialement le plus à l'extérieur (284, 384) en contact avec le bandage est réglable.

31. Jante comportant des moyens de montage pour recevoir et immobiliser un bandage flexible ayant un axe de rotation et comportant essentiellement une bande de roulement portée par une structure portante flexible située radialement à l'intérieur de ladite bande de roulement et délimitant au moins partiellement une cavité interne de révolution, ladite structure portante comprenant une zone de fixation radialement du côté de l'axe de rotation, pour l'immobilisation de ladite structure portante sur des moyens de liaison à un moyeu, lesdits moyens de liaison à un moyeu formant un ensemble rigide, ladite zone de fixation étant disposée axialement entre les limites latérales de ladite structure portante, caratérisée en ce que ladite zone de fixation est fendue circonférentiellement, de sorte que le bandage présente deux coins de liaison (320), susceptibles d'être déplacés axialement relativement l'une par rapport à l'autre, ladite jante comportant :
- deux rebords (380, 381) servant chacune de siège pour l'une des deux coins (320),
- un profilé (321) destiné à coopérer avec lesdits rebords (380, 381) pour pincer lesdits coins (320) et les immobilser sur la jante.

32. Jante selon la revendication 31, comportant des cercles supplémentaires (383) permettant d'élargir la surface d'appui du bandage sur la jante.

33. Procédé de fabrication d'un bandage flexible ayant un axe de rotation et comportant une structure portante ayant un plan médian perpendiculaire à l'axe de rotation et délimitant une cavité interne de révolution, la structure portante comportant une pluralité d'éléments de support répartis tout autour de la circonférence, chaque élément de support étant disposé sensiblement transversalement, chaque élément de support étant un élément lamifié comportant un empilage de lames flexibles superposées radialement, procédé dans lequel on dépose sur un support destructible les constituants requis pour obtenir le bandage, ledit procédé comprenant les étapes suivantes :
→ amener sur le support un tronçon de ruban,
→ courber le tronçon pour lui faire épouser la forme du support,
→ immobiliser les extrémités du tronçon,
→ répéter les étapes précédentes jusqu'à obtenir l'empilage souhaité.

## Patentansprüche

1. Flexibler Reifen, der eine Drehachse hat und im wesentlichen eine Lauffläche (11) aufweist, die durch eine tragende, flexible Struktur (11I, 11E) getragen wird, die radial im Inneren der genannten Lauffläche sitzt und mindestens teilweise einen inneren Rotationshohlraum umgrenzt, wobei die tragende Struktur folgendes umfaßt:
→ eine Befestigungszone (110) radial auf der Seite der Drehachse, für die unbewegliche Festlegung der genannten, tragenden Struktur auf Mitteln zur Verbindung mit einer Nabe, wobei die genannte Befestigungszone axial zwischen den seitlichen Begrenzungen der genannten, tragenden Struktur angeordnet ist, die genannte Befestigungszone dazu bestimmt ist, in Berührung mit den genannten Mitteln zur Verbindung mit einer Nabe zu treten, und die genannten Mittel zur Verbindung mit einer Nabe eine starre Baugruppe bilden,
→ eine Vielzahl von Trägerelementen (12), die sich im wesentlichen in Querrichtung erstrecken und zwischen der Befestigungszone und den Trägerelementen angeordnet sind, wobei die genannten Trägerelemente in Umfangsrichtung nebeneinanderliegen und alle um den Umfang verteilt sind, die Trägerelemente in der Befestigungszone eingelassen sind, und jedes Trägerelement ein Bündel von flexiblen Basisstücken (13, 23) aufweist, und
→ eine Verbindungsstruktur (165) zwischen den Trägerelementen,
**dadurch gekennzeichnet, daß** die flexiblen Basisstücke (13, 23), die im Bündel übereinanderliegen, von einer Elastomerschicht (15, 25) getrennt sind, die auf jedem der Basisstücke derart anhaftet, daß sie einen Träger bilden, der dazu eingerichtet ist, auf Biegung belastet zu werden, und daß die Verbindungsstruktur (165) zwischen den Trägerelementen (12) derart angeordnet ist, daß sich ein Teil einer radialen Belastung eines Trägerelements auch den in Umfangsrichtung benachbarten Trägerelementen mitteilt, während sie gleichzeitig Unterschiede in der Versetzung zwischen benachbarten Trägerelementen zuläßt.

2. Reifen nach Anspruch 1, worin die Befestigungszone auf einem Bruchteil angeordnet ist, der höchstens 50 % des Abstands entspricht, der axial die genannten, seitlichen Begrenzungen trennt.

3. Reifen nach Anspruch 1 oder 2, worin die genannten Trägerelemente unter der Lauffläche durchgehen.

4. Reifen nach einem der Ansprüche 1 bis 3, worin die Basisstücke aus Verbundmaterial bestehen.

5. Reifen nach einem der Ansprüche 1 bis 4, worin die Trägerelemente, gerade jenseits der Befestigungszone, in einer Richtung im wesentlichen parallel zur Drehachse ausgerichtet sind.

6. Reifen nach einem der Ansprüche 1 bis 5, worin die Befestigungszone im wesentlichen zwischen den axialen Grenzen des genannten Reifens zentriert ist.

7. Reifen nach einem der Ansprüche 1 bis 6, worin die Befestigungszone einstückig ist.

8. Reifen nach einem der Ansprüche 1 bis 7, worin die tragende Struktur einen ersten, radial inneren Teil (11I) der tragenden Struktur und einen zweiten, radial äußeren Teil (11E) der tragenden Struktur umfaßt, wobei der genannte erste und zweite Teil der tragenden Struktur durch eine Zone (17) geringeren Biegewiderstandes fest verbunden sind, jeder des genannten ersten und zweiten Teils der tragenden Struktur die genannten Trägerelemente umfaßt, und jedes Trägerelement des ersten Teils der tragenden Struktur sich mindestens von einem seitlichen Ende der genannten Befestigungszone aus erstreckt, so daß die Zonen mit niedrigerem Biegewiderstand zwischen dem ersten und zweiten Teil der tragenden Struktur unter Wirkung der Betriebsbelastungen radial bezüglich der Befestigungszone beweglich sind.

9. Reifen nach Anspruch 8, worin jedes Trägerelement des zweiten, radial äußeren Teils der tragenden Struktur sich von einem seitlichen Ende zum anderen seitlichen Ende des genannten zweiten Teils der tragenden Struktur erstreckt.

10. Reifen nach Anspruch 8 oder 9, worin sich jedes Trägerelement des ersten, radial inneren Teils der tragenden Struktur sich von einem seitlichen Ende zum anderen seitlichen Ende erstreckt.

11. Reifen nach einem der Ansprüche 8 bis 10, worin der Meridianabschnitt des ersten, radial inneren Teils der tragenden Struktur einen insgesamt bogenförmigen Verlauf aufweist, dessen Höhlung radial nach außen gerichtet ist.

12. Reifen nach einem der Ansprüche 8 bis 11, worin der Meridianschnitt des zweiten, radial äußeren Teils der tragenden Struktur einen insgesamt bogenförmigen Verlauf hat, dessen Höhlung radial nach innen gerichtet ist.

13. Reifen nach einem der Ansprüche 8 bis 12, worin die Enden eines jeden von erstem und zweitem Teil der tragenden Struktur im wesentlichen auf den seitlichen Grenzen der tragenden Struktur sitzen.

14. Reifen nach einem der Ansprüche 8 bis 13, worin die Zonen niedrigeren Biegewiderstandes radiale, undehnbare Drähte (170) aufweisen, die in eine Elastomermatrix eingelassen sind.

15. Reifen nach Anspruch 14, worin jeder radiale Draht bezüglich der tragenden Elemente auf der hohlen Innenseite auf einem (11I) der Teile der tragenden Struktur und auf der Außenseite auf dem anderen (11E) der Teile der tragenden Struktur angeordnet ist, wobei die aufeinanderfolgenden Drähte auf dem genannten radial inneren Teil der tragenden Struktur auf der Außenseite (170b, 170d) und die anderen auf der Innenseiten (170a, 170c) der inneren Höhlung angeordnet sind.

16. Reifen nach einem der Ansprüche 8 bis 15, worin, im Trägerelement, wenn man die Länge der Basisstücke betrachtet, die in der Abszisse krummlinig ist, die Länge der Basisstücke abnimmt, wenn man in der Dicke eines Trägerelements von der Höhlung nach außen geht.

17. Reifen nach einem der Ansprüche 1 bis 7, worin die Befestigungszone in Umfangsrichtung derart gespalten ist, daß der Reifen zwei Verbindungsecken (320) darbietet, die in der Lage sind, axial zueinander versetzt zu werden.

18. Reifen nach einem der Ansprüche 1 bis 7 oder 17, worin in dem Teil eines Trageelements, das unter der Lauffläche gelegen ist, wobei man die Länge der Basisstücke in krummliniger Abszisse betrachtet, die Länge eines jeden der Basisstücke zunimmt, wenn man sich in der Dicke eines Trägerelements von der Höhlung nach außen bewegt.

19. Reifen nach einem der Ansprüche 1 bis 18, worin jedes der Basisstücke eine flexible Lamelle ist, so daß jedes Trägerelement ein laminiertes Element bildet, das einen Stapel der genannten flexiblen Lamellen umfaßt.

20. Reifen nach Anspruch 19, worin in einem laminierten Element, indem man in Betracht zieht, daß die Breite "1" die Abmessung der Lamellen ist, die Breite der Lamellen, wenn man sich längs einer Lamelle in einer Umfangsrichtung bewegt, konstant ist.

21. Reifen nach Anspruch 19 oder 20, worin jede Lamelle aus der Überlagerung von Bändern (14) gebildet ist, die miteinander verklebt sind.

22. Reifen nach einem der Ansprüche 19 bis 21, worin die Lamellen aus einer warm aushärtenden oder thermoplastischen Harzmatrix gebildet sind, das durch Fasern verstärkt ist, die in jeder Lamelle überwiegend in Längsrichtung angeordnet sind.

23. Reifen nach einem der Ansprüche 1 bis 22, worin, wenn man in Betracht zieht, daß die Breite "lₛ" die Abmessung der Trägerelemente ist, wenn man sich in Umfangsrichtung bewegt, die Breite lₛ so ist, daß die Anzahl der Trägerelemente im gesamten Umfang mindestens 80 ist.

24. Reifen nach einem der Ansprüche 1 bis 22, worin, wenn man in Betracht zieht, daß die Breite "lₛ" die Abmessung der Trägerelemente ist, wenn man sich in Umfangsrichtung bewegt, die Breite lₛ so ist, daß die Anzahl der Trägerelemente im gesamten Umfang mindestens 200 ist.

25. Reifen nach einem der Ansprüche 1 bis 24, worin die Verbindungsstruktur mindestens unter der Lauffläche Umfangsverstärkungen (16) aufweist.

26. Reifen nach einem der Ansprüche 1 bis 25, worin die Verbindungsstruktur eine Elastomermatrix (165) aufweist, die die Trägerelemente in Umfangsrichtung trennt.

27. Reifen nach einem der Ansprüche 1 bis 26, worin die Trägerelemente im wesentlichen radial angeordnet sind.

28. Reifen nach einem der Ansprüche 1 bis 27, worin die Befestigungzone mindestens eine undehnbare Umfangsverstärkung (18) aufweist.

29. Reifen nach einem der Ansprüche 1 bis 28, worin das Elastomer ein Kautschuk bzw. Gummi ist.

30. Felge, die dazu bestimmt ist, mit einem Reifen nach einem der Ansprüche 1 bis 29 verwendet zu werden, mit Montagemitteln zur Aufnahme und unbeweglichen Festlegung der Befestigungszone des Reifens, und, mindestens axial auf einer Seite, mit einem Sitz, der sich im wesentlichen parallel zur Befestigungszone des Reifens erstreckt, **dadurch gekennzeichnet, daß** die axiale Lage des axial am weitesten außenliegenden Punktes (284, 384), der mit dem Reifen in Berührung steht, einstellbar ist.

31. Felge mit Montagemitteln zur Aufnahme und zur Festlegung eines flexiblen Reifens, der eine Drehachse hat und im wesentlichen eine Lauffläche aufweist, die von einer flexiblen Tragestruktur getragen ist, die radial auf der Innenseite der genannten Lauffläche gelegen ist und mindestens teilweise einen inneren Rotationshohlraum begrenzt, wobei die genannte Tragestruktur radial auf der Seite der Drehachse eine Befestigungszone zur Festlegung der genannten Tragestruktur auf Mitteln zur Verbindung mit der Nabe aufweist, die genannten Mittel zur Verbindung mit einer Nabe eine starre Baugruppe bilden und die genannte Befestigungszone axial zwischen den seitlichen Begrenzungen der genannten Tragestruktur angeordnet ist, **dadurch gekennzeichnet, daß** die genannte Befestigungszone in Umfangsrichtung derart geschlitzt ist, daß der Reifen zwei Verbindungsecken (320) aufweist, die in der Lage sind, axial gegeneinander versetzt zu werden, wobei die genannte Felge:
- zwei Ränder (380, 381), die jeweils als Sitze für eines beiden Ecken (320) dienen, und
- ein Profil (321) aufweist, das dazu bestimmt ist, mit den genannten Rändern (380, 381) zusammenzuwirken, um die genannten Ecken (320) auf der Felge festzuklemmen und sie festzulegen.

32. Felge nach Anspruch 31, mit ergänzenden Kreisringen (383), die es gestatten, die Auflagefläche des Reifens auf der Felge zu verbreitern.

33. Verfahren zur Herstellung eines flexiblen Reifens, der eine Drehachse aufweist und eine Tragestruktur umfaßt, die eine Mittelebene senkrecht zur Drehachse hat und einen inneren Rotationshohlraum umgrenzt, wobei die Tragestruktur eine Vielzahl von Trägerelementen umfaßt, die über den gesamten Umfang verteilt sind, jedes Trägerelement im wesentlichen in Querrichtung angeordnet ist, und jedes Trägerelement ein laminiertes Element ist, das einen Stapel aus flexiblen Lamellen umfaßt, die radial übereinanderliegen, wobei man in dem Verfahren auf einer zerstörbaren Unterlage die erforderlichen Bestandteile zum Erhalt des Reifens aufträgt und das genannte Verfahren die folgenden Schritte umfaßt:
→ Zuführen eines Teilstückes von Bändern auf die Unterlage,
→ Krümmen des Teilstücks, damit es sich an die Form der Unterlage anschmiegen läßt,
→ Festlegen der Enden des Bandes, und
→ Wiederholen der vorangehenden Schritte, bis man den gewünschten Stapel erhält.

## Claims

1. A resilient non-pneumatic tyre having an axis of rotation and essentially comprising a tread (11) borne by a resilient bearing structure (11I, 11E) radially situated inside said tread and defining, at least partially, an inner cavity of revolution, said bearing structure comprising:
• a zone of attachment (110) radially on the side of the axis of rotation, for the locking of said bearing structure on means of connection to a hub, said zone of attachment being axially placed between the lateral limits of said bearing structure, said attachment zone being designed for contacting said means of connection to a hub, said means of connection to a hub being designed to form a rigid assembly,
• a plurality of support elements (12), extending essentially transversely, placed between the zone of attachment and the tread, said support elements being juxtaposed circumferentially and distributed all around the circumference, the support elements being fitted in said zone of attachment, each support element comprising a bundle of superposed resilient base pieces (13, 23),
• an interconnecting structure (165) between the support elements,
**characterised in that**
the resilient base pieces (13, 23) superposed in each bundle are separated by a layer of elastomer (15, 25) adhering to each of the base pieces, so as to form a beam capable of undergoing bending stress, and **in that** the interconnecting structure (165) between the support elements (12) is arranged so that a portion of a radial stress of a support element is transferred to the circumferentially adjacent support elements, while allowing differences in displacement between adjacent support elements.

2. A non-pneumatic tyre according to Claim 1, in which the zone of attachment is located on a fraction corresponding to not more than 50% of the distance axially separating said lateral limits.

3. A non-pneumatic tyre according to Claim 1 or 2, in which said support elements are continuous under the tread.

4. A non-pneumatic tyre according to one of Claims 1 to 3, in which the base pieces are made of composite material.

5. A non-pneumatic tyre according to one of Claims 1 to 4, in which the support elements are, just beyond the zone of attachment, oriented in a direction substantially parallel to the axis of rotation.

6. A non-pneumatic tyre according to one of Claims 1 to 5, in which the zone of attachment is substantially centred between the axial limits of said tyre.

7. A non-pneumatic tyre according to one of Claims 1 to 6, in which the zone of attachment is in one piece.

8. A non-pneumatic tyre according to one of Claims 1 to 7, in which the bearing structure comprises a first, radially inner, bearing structure part (111) and a second, radially outer, bearing structure part (11E), said first and second bearing structure parts being integrated with each other by a zone of lesser bending strength (17), each of said first and second bearing structure parts comprising said support elements, each support element of the first bearing structure part extending at least from one lateral end to said zone of attachment, so that the zones of lesser bending strength between the first and second bearing structure parts are, under the effect of the working stresses, radially mobile in relation to the zone of attachment.

9. A non-pneumatic tyre according to Claim 8, in which each support element of the second, radially outer, bearing structure part extends from one lateral end to the other lateral end of said second bearing structure part.

10. A non-pneumatic tyre according to Claim 8 or 9, in which each support element of the first, radially inner, bearing structure part extends from one lateral end to the other lateral end.

11. A non-pneumatic tyre according to one of Claims 8 to 10, in which the meridian section of the first, radially inner, bearing structure part has a general bow shape, the concavity of which is oriented radially towards the outside.

12. A non-pneumatic tyre according to one of Claims 8 to 11, in which the meridian section of the second, radially outer, bearing structure part has a general bow shape, the concavity of which is oriented radially towards the inside.

13. A non-pneumatic tyre according to one of Claims 8 to 12, in which the ends of each of the first and second bearing structure parts are situated substantially at the lateral limits of the bearing structure.

14. A non-pneumatic tyre according to one of Claims 8 to 13, in which the zones of lesser bending strength comprise inextensible radial cords (170) embedded in a rubber matrix.

15. A non-pneumatic tyre according to Claim 14, in which each radial cord is placed relative to the support elements of the inner cavity side on one of the bearing structure parts (11I) and of the outer side on the other one of the bearing structure parts (11E), some of the successive cords (170b, 170d) on said first, radially inner, bearing structure part being placed outside and the others (170a, 170c) being placed inside the inner cavity.

16. A non-pneumatic tyre according to one of Claims 8 to 15, in which, in a support element, considering the length of the base pieces in abscissa curvilinear, the length of each of the base pieces decreases on being displaced in the thickness of a support element from the cavity towards the outside.

17. A non-pneumatic tyre according to one of Claims 1 to 7, in which the zone of attachment is circumferentially slotted, so that the tyre has two connecting ribs (320), capable of being axially displaced relative to each other.

18. A non-pneumatic tyre according to one of Claims 1 to 7 or 17, in which, in the part of a support element situated under the tread, considering the length of the base pieces in abscissa curvilinear, the length of each of the base pieces increases on being displaced in the thickness of a support element from the cavity towards the outside.

19. A non-pneumatic tyre according to one of Claims 1 to 18, in which each of the base pieces is a resilient sheet, so that each support element forms a laminated element comprising a stack of said resilient sheets.

20. A non-pneumatic tyre according to Claim 19, in which, in a laminated element, considering that the width "I" is the dimension of the sheets on being displaced along a sheet following a circumferential orientation, the width of the sheets is constant.

21. A non-pneumatic tyre according to Claim 19 or 20, in which each sheet is formed by the superposition of bands (14) affixed to one another.

22. A non-pneumatic tyre according to one of Claims 19 to 21, in which the sheets are formed from a thermosetting or thermoplastic resin matrix, reinforced by fibres placed mainly longitudinally in each sheet.

23. A non-pneumatic tyre according to one of Claims 1 to 22, in which, considering that the width "Iₛ" is the dimension of the support elements on being circumferentially displaced, the width Iₛ is such that the number of support elements in the whole circumference is at least 80.

24. A non-pneumatic tyre according to one of Claims 1 to 22, in which, considering that the width "Iₛ" is the dimension of the support elements on being circumferentially displaced, the width Iₛ is such that the number of support elements in the whole circumference is at least 200.

25. A non-pneumatic tyre according to one of Claims 1 to 24, in which the interconnecting structure comprises circumferential reinforcements (16) at least under the tread.

26. A non-pneumatic tyre according to one of Claims 1 to 25, in which the interconnecting structure comprises a rubber matrix (165) separating the support elements circumferentially.

27. A non-pneumatic tyre according to one of Claims 1 to 26, in which the support elements are arranged substantially radially.

28. A non-pneumatic tyre according to one of Claims 1 to 27, in which the zone of attachment comprises at least one circumferentially inextensible reinforcement (18).

29. A non-pneumatic tyre according to one of Claims 1 to 28, in which the elastomer is a rubber.

30. A rim intended to be used with a non-pneumatic tyre according to one of Claims 1 to 29, comprising mounting means for receiving and locking said zone of attachment of the tyre and comprising, on at least one side axially, a seat extending substantially parallel to said zone of attachment of the tyre, **characterised in that** the axial position of the axially outermost point (284, 384) in contact with the tyre is adjustable.

31. A rim comprising mounting means for receiving and locking a resilient non-pneumatic tyre having an axis of rotation and comprising essentially a tread borne by a resilient bearing structure radially situated inside said tread and defining, at least partially, an inner cavity of revolution, said bearing structure comprising a zone of attachment radially on the side of the axis of rotation, for the locking of said bearing structure on means of connection to a hub, said means of connection to a hub forming a rigid assembly, said zone of attachment being placed axially between the lateral limits of said bearing structure, **characterised in that** said zone of attachment is circumferentially slotted, so that the tyre has two connecting ribs (320) capable of being axially displaced in relation to each other, said rim comprising:
- two flanges (380, 381), each serving as a seat for one of the two ribs (320),
- a profiled shape (321) intended to cooperate with said flanges (380, 381) in order to grip said ribs (320) and to lock them on the rim.

32. A rim according to Claim 31, comprising supplementary rings (383) which widen the surface of support of the non-pneumatic tyre on the rim.

33. A method of manufacture of a resilient non-pneumatic tyre having an axis of rotation and comprising a bearing structure having a median plane perpendicular to the axis of rotation and defining an inner cavity of revolution, the bearing structure comprising a plurality of support elements distributed all around the circumference, each support element being placed substantially transversely, each support element being a laminated element comprising a stack of resilient sheets superposed radially, in which method the constituents required for obtaining the non-pneumatic tyre are laid on a destructible support, said method comprising the following steps:
• bringing a section of band on to the support,
• curving the section to make it follow exactly the shape of the support,
• locking the ends of the section,
• repeating the preceding steps until the desired stacking is obtained.
